# FASCICULE DE BREVET EUROPEEN

(11) **EP 1 032 158 B1**
(45) Date de publication et mention de la délivrance du brevet: **09.11.2005**
(21) Numéro de dépôt: 00400450.3
(22) Date de dépôt: 18.02.2000
(51) Int. Cl.: H04L 9/06, H04L 9/30

(54) **Circuit et procédé pour la sécurisation d'un coprocesseur dédié à la cryptographie**
Verfahren und Vorrichtung zur Sicherung eines Kryptokoprocessors
Method and apparatus for protecting a coprocessor used for encryption

(30) Priorité: 25.02.1999 FR 9902365
(43) Date de publication de la demande: 30.08.2000
(73) Titulaire: STMicroelectronics S.A., 92120 Montrouge (FR)
(72) Inventeur: Liardet, Pierre-Yvan, 75116 Paris (FR); Romain, Fabrice, 75116 Paris (FR); Plessier, Bernard, 75116 Paris (FR); Hennebois, Brigitte, 75116 Paris (FR)
(74) Mandataire: Ballot, Paul Denis Jacques

(56) Documents cités:
- FR-A- 2 672 402
- MIYAGUCHI S: "SECRET KEY CIPHERS THAT CHANGE THE ENCIPHERMENT ALGORITHM UNDER THECONTROL OF THE KEY" NTT REVIEW, vol. 6, no. 4, 1 juillet 1994 (1994-07-01), pages 85-90, XP000460342
- YI X ET AL: "A METHOD FOR OBTAINING CRYPTOGRAPHICALLY STRONG 8X8 S-BOXES" IEEE GLOBAL TELECOMMUNICATIONS CONFERENCE, PHOENIX, ARIZONA, NOV. 3 - 8, 1997, vol. 2, 3 novembre 1997 (1997-11-03), pages 689-693, XP000737626 INSTITUTE OF ELECTRICAL AND ELECTRONICS ENGINEERS

## Description

La présente invention se rapporte à un circuit et à un procédé pour la sécurisation d'un coprocesseur dédié à la cryptographie.

Plus particulièrement, l'invention concerne un circuit et un procédé de sécurisation du chargement d'une clé numérique, et/ou d'un message à chiffrer ou à déchiffrer, faisant intervenir notamment un registre supplémentaire de chargement de données afin de limiter la visibilité des échanges de données dans le circuit en question.

Le domaine d'application de l'invention est essentiellement le domaine de la cryptologie. La cryptologie peut se définir comme étant la science de la dissimulation de l'information. Elle constitue, avec la sécurité physique des composants et des systèmes d'exploitation, la dimension essentielle de la sécurité des cartes à puce.

La cryptologie englobe la cryptographie qui est l'art de chiffrer et de déchiffrer les messages et la cryptanalyse qui est l'art de casser les codes secrets. Le chiffrement des messages consiste à transformer une information à l'aide d'une convention secrète. La fonction de transformation constitue l'algorithme cryptographique dont le secret réside dans des paramètres appelés clés. L'opération inverse, qui est le déchiffrement du message, nécessite la connaissance de ces clés.

Dans les cartes à puces, la cryptographie met en oeuvre divers mécanismes qui ont pour but d'assurer soit la confidentialité des informations, soit l'authentification des cartes ou des utilisateurs, soit encore la signature des messages. L'ensemble des moyens mettant en oeuvre la cryptographie forment un crypto-système.

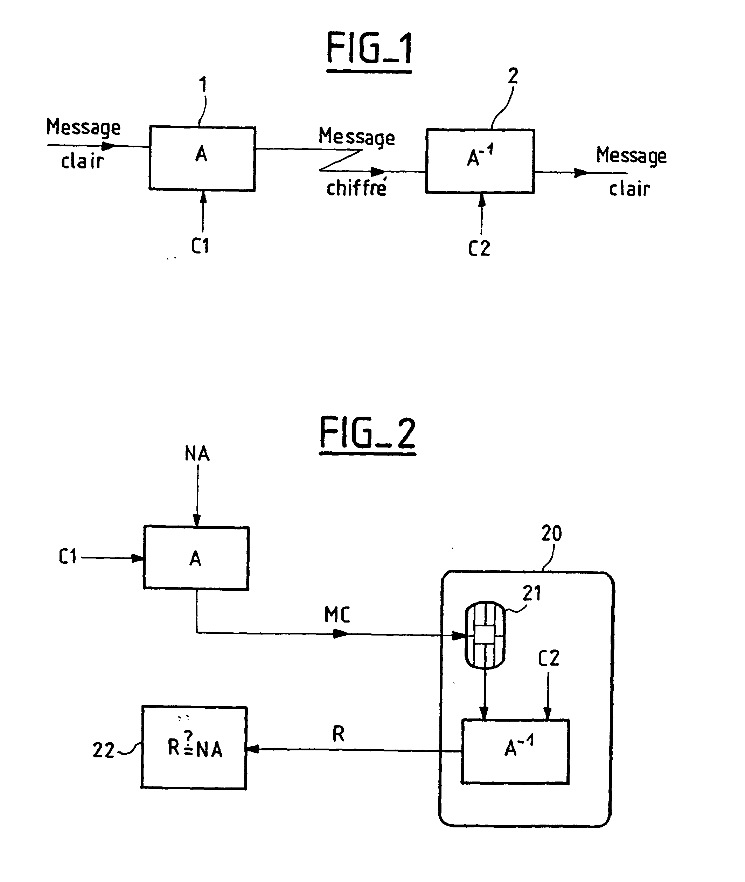

La figure 1 montre un schéma simplifié d'un crypto-système. Sur cette figure, un message clair est transmis depuis une unité d'émission 1 vers une unité de réception 2 sous la forme d'un message chiffré. Dans l'unité d'émission 1, le message en clair est transformé par un algorithme A qui est fonction d'une clé de chiffrement C1. Dans l'unité de réception 2, les informations reçues sont déchiffrées à l'aide d'un algorithme inverse A⁻¹ qui utilise une clé de déchiffrement C2 afin de retrouver le message clair. Dans ce cas précis, à savoir lorsqu'on utilise un algorithme de chiffrement et de déchiffrement, la clé de chiffrement et la clé de déchiffrement sont identiques. Un message peut ainsi être transmis entre une unité d'émission et une unité de réception sur un canal non sécurisé. Seul un utilisateur autorisé, qui détient la clé secrète de déchiffrement, pourra décoder le message chiffré.

L'opération de déchiffrement implique que l'algorithme de chiffrement soit un algorithme réversible. Cette condition n'est pas nécessaire par exemple lors d'une opération d'authentification. En effet, certains mécanismes d'authentification utilisent un même algorithme lors de l'émission et de la réception d'un message.

Le choix d'un algorithme de chiffrement pour carte à puce dépend du service de sécurité attendu, de la performance et surtout du coût des ressources nécessaires à son implantation, qui dépend essentiellement de la taille des mémoires de type RAM et des mémoires de type ROM.

En effet, l'utilisation d'algorithmes encombrants augmente très vite le prix des cartes à puce. Un algorithme de chiffrement très utilisé dans les cartes à puce est l'algorithme DES (Data Encryption System dans la littérature anglaise et selon le standard ISO/ANSI). Un tel algorithme nécessite deux données d'entrée (la clé de chiffrement ou de déchiffrement et l'information à chiffrer ou à déchiffrer) et produit une donnée de sortie (le résultat du traitement par l'algorithme). La taille des signaux issus de l'algorithme de chiffrement est généralement de 64 bits.

Le message clair peut être transformé en un message chiffré de même longueur ou de longueur différente, par exemple en combinant des blocs de données, en les chaînant et permettant ainsi de chiffrer différemment des blocs de données identiques.

Il existe des crypto-systèmes symétriques : ce sont les crypto-systèmes faisant appel à des algorithmes de chiffrement et de déchiffrement dont les clés de chiffrement et de déchiffrement sont identiques. Lorsque les clés de chiffrement et de déchiffrement sont différentes, le crypto-système est dit asymétrique. D'autres crypto-systèmes existent, notamment les crypto-systèmes à apport nul de connaissance.

Les algorithmes symétriques posent des problèmes de gestion de clé. En effet, lorsqu'un grand nombre d'utilisateurs font partie d'un réseau, il faut que chacun d'entre eux possède une clé personnalisée car une clé unique constituerait une menace pour tout le système dans le cas où elle serait compromise.

Comme il est peu pratique et risqué de stocker toutes les clés, la méthode consiste à les diversifier à partir d'une clé maîtresse et d'un identifiant de chaque carte. Les clés maîtresses doivent être particulièrement protégées et peuvent être contenues dans un module de sécurité ou une carte dite carte mère possédée par l'émetteur des cartes.

La figure 2 montre un exemple de vérification dynamique de la validité d'une opération de déchiffrement d'un message numérique transmis de façon chiffrée.

Sur cette figure, un nombre aléatoire NA est chiffré à l'aide d'un algorithme de chiffrement A qui fait intervenir une clé de chiffrement C1. Un message chiffré MC ainsi créé est transmis à une carte à puce 20. Un micro-calculateur 21 de la carte à puce 20 déchiffre le message chiffré à l'aide d'un algorithme de déchiffrement inverse A⁻¹ et d'une clé de déchiffrement C2, qui est dans la pratique identique à la clé de chiffrement C1. Un nombre R est le résultat de cette opération de déchiffrement. Un module de test 22 permet de récupérer le nombre R et de le comparer au nombre initialement émis NA. La carte à puce 20, qui a effectué l'opération de déchiffrement du message chiffré MC, est considérée comme authentique si le nombre NA est égal au nombre R. Seule une carte authentique est en mesure de retrouver le nombre NA en utilisant sa clé secrète.

Les clés numériques utilisées par les composants électroniques, notamment dans des micro-calculateurs de carte à puce, pour chiffrer ou déchiffrer des messages revêtent donc un caractère essentiel pour la confidentialité des données véhiculées. Toute personne en possession de la clé numérique associée à un algorithme de chiffrement ou de déchiffrement est en mesure d'accéder à des données qui ne lui sont pas destinées.

Des méthodes de sécurisation des clés numériques existent. Par exemple, dans le document "Secret Key Ciphers that Change the Encipherment Algorithm under the Control of the Key", Miyaguchi S., p. 85; NTT Review, Telecommunications Association, Tokyo, JP, juillet 1994, Vol. 6, No 4, l'algorithme de chiffrement est modifié dynamiquement sous le contrôle de la clé de chiffrement pour rendre le chiffrement plus résistant aux attaques.

Mais le système actuel qui utilise ces clés numériques présente encore quelques faiblesses au niveau de la sécurisation, par exemple au moment du chargement d'une clé numérique utilisée pour le chiffrement ou le déchiffrement d'un message numérique.

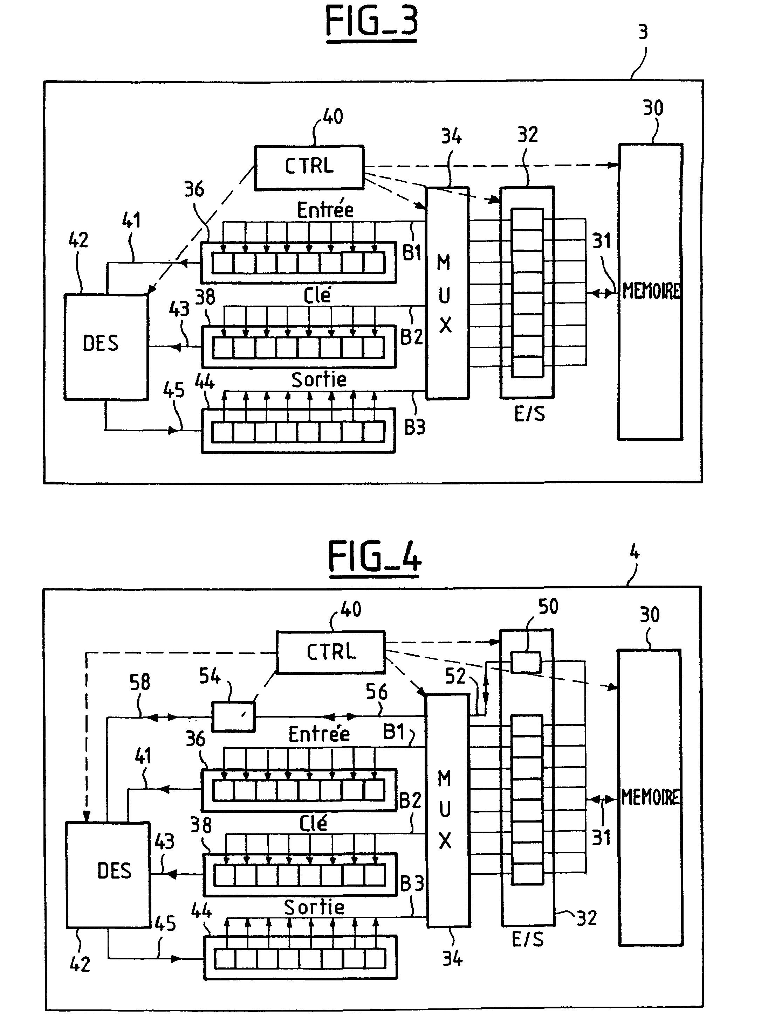

Un exemple d'une telle situation est données à la figure 3. La figure 3 montre un circuit électronique 3 réalisant le chargement d'une clé numérique, de chiffrement ou de déchiffrement, dans les registres d'un co-processeur dédié à la cryptographie.

A la figure 3, un module de mémoire 30 est connecté à une batterie de registres d'entrée/sortie 32 au moyen d'une liaison bi-directionnelle 31. La batterie de registres d'entrée/sortie 32 est composée de registres élémentaires qui ont, par exemple, une capacité de mémoire de un octet. Un multiplexeur 34 assure la répartition des données contenues dans la batterie de registres d'entrée/sortie 32 entre des registres élémentaires d'un registre d'entrée 36 et d'un registre de clé 38.

Un module de contrôle 40 gère l'ensemble des opérations effectuées par le module de mémoire 30, la batterie de registres d'entrée/sortie 32, et le multiplexeur 34.

Le module de contrôle 40 assure en outre que les données à chiffrer ou à déchiffrer émises par le module de mémoire 30 soient transmises dans le registre d'entrée 36 au moyen d'un premier bus de communication B1, et que les données relatives à la clé numérique soient transmises dans le registre de clé 38 au moyen d'un deuxième bus de communication B2.

Il existe plusieurs fonctionnements possibles pour la transmission de données depuis la batterie de registres d'entrée/sortie 32 vers le registre d'entrée 36 et le registre de clé 38.

Un premier mode de transmission peut être le suivant : l'ensemble des registres élémentaires de la batterie de registres d'entrée/sortie 32 sont remplis avec des données issues du module de mémoire 30. La totalité des informations contenues dans la batterie de registres d'entrée/sortie 32 est seulement alors transmise dans chacun des registres élémentaires appropriés du registre d'entrée 36 ou, le cas échéant, dans chacun des registres élémentaires appropriés du registre de clé 38.

Un autre mode de transmission possible est le suivant : à chaque fois qu'un registre de la batterie de registres d'entrée/sortie est chargé depuis le module de mémoire 30, il est aussitôt transmis via le multiplexeur 34 vers un registre élémentaire approprié du registre d'entrée 36 ou du registre de clé 38.

Dans tous les cas, un module de traitement 42, fonctionnant à l'aide d'un algorithme de chiffrement ou de déchiffrement, requiert l'ensemble des données relatives au message à traiter contenues dans le registre d'entrée 36 et l'ensemble des données relatives à la clé numérique contenues dans le registre de clé 38. Le fonctionnement du module de traitement est également géré par l'unité de contrôle 40.

Le message à traiter et la clé numérique sont transmis vers le module de traitement 42 respectivement depuis le registre d'entrée 36 et depuis le registre de clé 38, respectivement au moyen d'une liaison 41 et d'une liaison 43. Avec l'ensemble de ces données, le module de traitement 42 est en mesure de transmettre un message traité dans un registre de sortie 44 au moyen d'une liaison 45.

Les données contenues dans le registre de sortie 44 peuvent alors être transmises au module de mémoire 30 via le multiplexeur 34, la batterie de registres d'entrée/sortie 32 et un troisième bus de communication B3 qui assure l'échange de données entre le registre de sortie 44 et le multiplexeur 34.

Un circuit tel que celui décrit à la figure 3 pose un problème de visibilité depuis le monde extérieur. En effet, une mesure des signaux électriques révélateurs d'échanges d'informations entre différentes parties du circuit peut permettre d'accéder à des informations confidentielles, qui participent à la protection de données par le système de chiffrement ou de déchiffrement.

En effet, au moment de l'utilisation de la clé numérique par un composant habilité (tel qu'une carte à puce), une certaine visibilité sur la clé numérique est possible par l'étude de tels signaux électriques. Les signaux électriques sensibles peuvent être observés sur des liaisons électriques ou des bus de communication, notamment entre le module de mémoire 30 et la batterie de registres d'entrée/sortie 32, ainsi qu'entre la batterie de registres d'entrée/sortie 32 et le multiplexeur 34, entre le multiplexeur 34 et les différents registres d'entrée 36, de clé 38 et de sortie 44 ou encore entre les différents registres d'entrée et de sortie et le module de traitement 42.

La clé numérique peut ainsi être découverte suite à une accumulation de mesures des signaux électriques précédemment cités, et à une étude statistique de ces mesures.

Le composant peut par exemple utiliser la clé numérique dans la situation présentée à la figure 3. Supposons le cas de figure où le composant effectue une opération de chiffrement. Pour effectuer une telle opération, le composant a besoin de charger, depuis un module de mémoire interne, la clé de chiffrement. Il peut ainsi être authentifié comme étant un composant légitime, ayant le droit d'effectuer l'opération. Aussi, si le composant est observé alors qu'on sait qu'il effectue une opération de chargement de la clé, l'enregistrement des informations véhiculées par les signaux électriques mis en jeu permet d'aboutir à la connaissance de la clé numérique de chiffrement. Une fois que cette clé est connue, il est très facile de reproduire le comportement du composant légitime, et par la suite d'effectuer des opérations initialement interdites pour un utilisateur quelconque.

Un autre cas de figure peut poser un problème relatif à la visibilité des informations circulant sous forme de signaux électriques. En effet, outre les informations relatives à la clé numérique, il est également possible, par l'étude de certains signaux électriques, notamment entre la sortie du module de traitement et le module de mémoire, de connaître le résultat traité que récupère le composant dans son module de mémoire.

La connaissance du seul résultat de chiffrement ou de déchiffrement, éventuellement associé à la connaissance du message d'origine à chiffrer ou à déchiffrer, peut être suffisante pour déjouer la sécurité apportée par la confidentialité d'une clé numérique. En effet, il suffira de transmettre à un composant le résultat traité attendu en fonction du message initial pour pouvoir effectuer les opérations qui ne sont pas initialement autorisées.

La présente invention a pour objet de pallier les problèmes qui viennent d'être décrits. A cet effet, l'invention propose un circuit électronique, pour la sécurisation d'un coprocesseur dédié à la cryptographie, qui assure la non-visibilité vis-à-vis d'une étude des signaux électriques lors des transferts de données, de la clé numérique ou du résultat d'une opération de chiffrement ou de déchiffrement.

Pour atteindre ces objectifs, l'invention propose l'utilisation d'un registre supplémentaire, dit registre de brouillage, dans la batterie de registres d'entrée/sortie 32 du circuit décrit à la figure 3. Ce registre supplémentaire est rempli, par des bits dits bits de brouillage, de façon aléatoire à des instants choisis également de façon aléatoire lors du chargement dans la batterie de registres d'entrée/sortie de la clé numérique. Un aléa est ainsi introduit. Cet aléa permet de supprimer une partie de la visibilité que peut avoir le monde extérieur sur le comportement du composant, et donc sur les données qu'il est en train de traiter. Une analyse des signaux électriques associés aux données en cours de traitement ne peut plus être efficace pour entrer en possession d'informations confidentielles.

Le chargement du registre de brouillage est une opération factice qui est sans influence sur le chargement des données essentielles au fonctionnement des opérations de chiffrement ou de déchiffrement. Le chargement des données qui sont très sensibles est ainsi sécurisé.

L'invention concerne donc un circuit électronique pour la sécurisation d'un coprocesseur dédié à la cryptographie comprenant :
- un module de mémoire,
- une batterie de registres d'entrée/sortie connectée au module de mémoire par une liaison bidirectionnelle,
- un multiplexeur pour assurer un transfert de données entre la batterie de registres d'entrée/sortie, et un registre d'entrée ou un registre de clé, le registre d'entrée et le registre de clé recevant respectivement les données d'un message à traiter par un chiffrement ou un déchiffrement et les données d'une clé numérique de chiffrement ou de déchiffrement,
- un module de traitement pour effectuer une opération de chiffrement ou de déchiffrement admettant à une première entrée les messages à traiter contenus dans le registre d'entrée, et à une deuxième entrée la clé numérique contenue dans le registre de clé pour traiter le message à traiter,
- un module de contrôle pour gérer les opérations effectuées par le module de mémoire, la batterie de registres d'entrée/sortie, le multiplexeur et le module de traitement,
- un registre de sortie pour transmettre à la batterie de registres d'entrée/sortie via le multiplexeur le résultat d'une opération de chiffrement ou de déchiffrement,
caractérisé en ce que la batterie de registres d'entrée/sortie comprend un registre de brouillage pour recevoir des bits de brouillage étrangers au message à chiffrer ou à déchiffrer et/ou à la clé numérique.

Selon un perfectionnement de l'invention, le circuit selon l'invention comprend un registre d'entrée annexe connecté au module de traitement et au multiplexeur pour recevoir les bits de brouillage émis directement par le module de traitement ou issus du module de mémoire. Par bits de brouillage issus du module de mémoire, on comprendra que les bits de brouillage ont pu être transmis à d'autres éléments du circuit avant de parvenir au registre d'entrée annexe.

Selon un mode de réalisation particulier, le circuit selon l'invention est caractérisé en ce que les bits de brouillage sont générés de façon aléatoire par le module de mémoire ou le module de traitement.

Les bits de brouillage sont, dans des applications préférées de l'invention, produits sous forme d'octets.

Un autre objet de l'invention est de proposer un procédé de sécurisation d'un coprocesseur dédié à la cryptographie comprenant les étapes consistant à successivement :
- transmettre depuis un module de mémoire vers une batterie de registres d'entrée/sortie des données au moyen d'une liaison bidirectionnelle,
- transmettre, par l'intermédiaire d'un multiplexeur, depuis la batterie de registres d'entrée/sortie vers un registre d'entrée, respectivement vers un registre de clé, des données correspondant à un message à traiter par une opération de chiffrement ou de déchiffrement, respectivement des données correspondant à une clé numérique de chiffrement ou de déchiffrement,
- traiter le message à traiter au moyen d'un module de traitement admettant à une première entrée les données issues du registre d'entrée, à une seconde entrée les données issues du registre de clé et fournissant les données correspondant au message traité vers un registre de sortie,
caractérisé en ce que le procédé selon l'invention comprend l'étape supplémentaire consistant à transmettre à un registre de brouillage de la batterie de registres d'entrée/sortie des bits de brouillage étrangers au message à traiter et à la clé numérique, les bits de brouillage étant émis directement par le module de mémoire ou étant issus du module de traitement.

Selon un perfectionnement de l'invention, les bits de brouillage sont transmis dans un registre annexe connecté au module de traitement et au multiplexeur pour recevoir les bits de brouillage émis directement par le module de traitement ou issus du module de mémoire.

Selon une application particulière du procédé selon l'invention, les bits de brouillage sont transmis de façon aléatoire.

Selon un autre mode particulier de réalisation du procédé selon l'invention, des bits de brouillage sont transmis au registre de brouillage pour chaque chargement dans la batterie de registres d'entrée/sortie d'une clé numérique.

Les différents aspects et avantages de l'invention apparaîtront plus clairement dans la suite de la description en référence aux figures, qui ne sont données qu'à titre indicatif et nullement limitatif de l'invention, et qui sont à présent introduites :
- la figure 1, déjà décrite, montre un schéma simplifié d'un crypto-système,
- la figure 2, déjà décrite, montre un exemple de vérification dynamique de la validité du chiffrement d'un message transmis après chiffrement,
- la figure 3, déjà décrite, montre un circuit électronique réalisant le chargement d'une clé numérique dans les registres d'un co-processeur dédié au chiffrement de données,
- la figure 4 montre un circuit électronique selon l'invention réalisant de façon sécurisée le chargement d'une clé numérique dans les registres d'un co-processeur dédié à la cryptographie.

A la figure 4, on retrouve les mêmes éléments que dans le circuit électronique décrit à la figure 3 : un module de mémoire 30, une batterie de registres d'entrée/sortie 32, un multiplexeur 34, un registre d'entrée 36, un registre de clé 38, un module de contrôle 40, un module de traitement 42, un registre de sortie 44. On retrouve également les mêmes liaisons électriques ou bus de communication que dans le circuit décrit à la figure 3.

Le circuit selon l'invention se distingue du circuit de l'art antérieur présenté à la figure 3 notamment par la présence d'un registre supplémentaire 50, dit registre de brouillage, dans la batterie de registres d'entrée/sortie.

Contrairement aux autres registres de la batterie de registres d'entrée/sortie, le registre de brouillage 50 n'est pas destiné à recevoir des données relatives au message à traiter ou à la clé numérique. Le registre de brouillage 50 est destiné à recevoir un certain nombre de bits, dits bits de brouillage, qui sont destinés à sécuriser le chargement d'une clé numérique ou d'un message traité dans la batterie de registres d'entrée/sortie 32.

Dans un mode de réalisation particulier de l'invention, le registre de brouillage 50 peut contenir huit bits. Sa taille est donc de un octet. Cet exemple n'est cependant pas limitatif et la taille du registre de brouillage 50 peut différer selon les modes de réalisation du circuit selon l'invention. Par souci de simplification de la description, on se limitera dans la suite de la description au cas où le registre de brouillage 50 a une taille de un octet. Une liaison bidirectionnelle 52 assure le transfert de données entre le registre de brouillage 50 et le multiplexeur 34.

Selon un mode de réalisation préféré de l'invention, un registre d'entrée annexe 54 est connecté d'une part au multiplexeur 34, au moyen d'une liaison bidirectionnelle 56, et d'autre au module de chiffrement 42, au moyen d'une liaison bidirectionnelle 58. De préférence, le registre d'entrée annexe 54 a la même taille que le registre de brouillage 50. Le registre annexe 54 est en effet destiné à recevoir ou à transmettre les bits de brouillage depuis ou vers le registre de brouillage 50. Il n'y a cependant pas d'inconvénient majeur à ce que le registre d'entrée annexe 54 ait une taille différente de celle du registre de brouillage 50.

Le fonctionnement du circuit selon un mode de réalisation particulier de l'invention est le suivant : le module de mémoire 30 charge, dans les registres élémentaires de la batterie de registres d'entrée/sortie 32, un certain nombre de bits sous forme d'octets qui correspondent soit à un message à traiter, soit à la clé numérique. Lorsque la clé numérique est chargée depuis la mémoire 30 vers la batterie d'entrée/sortie 32, des bits de brouillage sont émis de façon aléatoire sur la liaison 31. Les bits de brouillage sont ensuite orientés vers le registre de brouillage 50 selon différents modes opératoires exposés précédemment. Les bits de brouillage peuvent, comme les autres données, être transmis par octets.

Un nombre aléatoire d'octets de brouillage est donc émis entre deux octets porteurs des informations relatives à la clé numérique. Dans le cas où la clé numérique a une taille de huit octets, un octet de brouillage peut être transmis entre deux octets quelconques codant la clé numérique. Un octet de brouillage peut également être transmis avant le premier octet codant la clé numérique, ou encore après le dernier octet codant la clé numérique.

Par ailleurs, un nombre aléatoire d'octets de brouillage peut être émis lors d'un même chargement d'une clé numérique. Dans ce cas de figure, chaque octet de brouillage émis est toujours orienté vers le registre de brouillage 50, chaque nouvel octet de brouillage émis effaçant le précédent octet de brouillage conservé dans le registre de brouillage 50.

Il en est de même pour les octets de brouillage issus du module de traitement 42 et reçus par le registre d'entrée annexe 54. Ainsi, une personne qui tente d'obtenir de façon frauduleuse la clé numérique par l'étude des signaux électriques émis sur la liaison bidirectionnelle 31 est condamnée à l'échec. En effet, les signaux électriques correspondant à l'émission des octets de brouillage vont fausser les études statistiques qui auraient pu conduire à la découverte de la clé numérique.

La liaison bidirectionnelle 52 assure le transfert de données entre le registre de brouillage 50 et le multiplexeur 34 de façon à ce qu'une étude des signaux électriques entre la batterie de registre d'entrée/sortie 32 et le multiplexeur 34, en vue de trouver la clé numérique, soit également vouée à l'échec. En sortie du multiplexeur 34, le module de contrôle 40 oriente les données issues du registre de brouillage 50 vers le registre d'entrée annexe 54 au moyen de la liaison bidirectionnelle 56. Cette liaison bidirectionnelle peut être du type de celle qui constitue les bus précédemment décrits.

De la même façon que le registre 36 et le registre de clé 38 peuvent avoir une taille similaire au registre de la batterie de registre d'entrée/sortie 32, il est suffisant que le registre d'entrée annexe 54 soit de la taille minimale nécessaire pour recevoir les données issues du registre de brouillage 50. La liaison bidirectionnelle 56 assure ici aussi la perturbation d'une éventuelle étude statistique des signaux électriques échangés entre le multiplexeur 34 et les registres d'entrée 36 et de clé 38.

De la même façon, l'étude des signaux électriques entre les registres d'entrée 36 et de clé 38 est perturbée par les signaux électriques véhiculés par la liaison bidirectionnelle 58 entre le registre d'entrée annexe 54 et le module de traitement 42.

Dans un mode de réalisation préféré de l'invention, le registre d'entrée annexe 54 possède une adresse proche des adresses du registre d'entrée 36 cu du registre de clé 38. Une personne étudiant les signaux électriques échangés sur les différents bus ne peut ainsi pas observer de différence évidente lorsque les adresses des registres destinataires sont véhiculées. Lorsque le module de traitement 42 produit le message chiffré qu'il mémorise dans le registre de sortie 44 au moyen de la liaison 45, il produit, de façon aléatoire, et pas nécessairement pour chaque opération chiffrée, des bits de brouillage qui sont mémorisés dans le registre d'entrée annexe 54 au moyen de la liaison bidirectionnelle 58. Ces nouveaux bits de brouillage sont également transmis via le multiplexeur 34 à la batterie de registre d'entrée/sortie 50 simultanément à la transmission des données contenues dans le registre de sortie 44 vers le registre d'entrée/sortie 32 via le multiplexeur 34.

Une information électrique de brouillage est ainsi également présente lors du chargement dans le module de mémoire 30 du résultat de l'opération de chiffrement ou de déchiffrement. Une personne qui aurait connaissance du message à chiffrer ne peut ainsi pas entrer en connaissance du résultat de chiffrement au moyen d'une étude statistique des signaux électriques véhiculés sur les différentes liaisons intervenant.

Le circuit et le procédé de sécurisation selon l'invention sont susceptibles d'ête utilisés pour toute opération de chiffrement et de déchiffrement. Le circuit et le procédé selon l'invention utilisent donc un signal électrique de brouillage pour l'ensemble des transferts de données sensibles nécessaires pour réaliser une opération de chiffrement ou de déchiffrement au moyen d'une clé numérique.

Le circuit et le procédé selon l'invention tirent parti du fait que les opérations effectuées à l'intérieur d'une batterie de registre sont beaucoup moins accessibles que les informations électriques présentes entre les batteries de registre et différents éléments du circuit.

## Revendications

1. Circuit électronique (4) pour la sécurisation d'un coprocesseur dédié à la cryptographie comprenant :
- un module de mémoire (30),
- une batterie de registres d'entrée/sortie (32) connectée au module de mémoire (30) par une liaison bidirectionnelle (31),
- un multiplexeur (34) pour assurer un transfert de données entre la batterie de registres d'entrée/sortie (32), et un registre d'entrée (36) ou un registre de clé (38), le registre d'entrée (36) et le registre de clé (38) recevant respectivement les données d'un message à traiter par un chiffrement ou un déchiffrement et les données d'une clé numérique de chiffrement ou de déchiffrement,
- un module de traitement (42) pour effectuer une opération de chiffrement ou de déchiffrement admettant à une première entrée les messages à traiter contenus dans le registre d'entrée (36), et à une deuxième entrée la clé numérique contenue dans le registre de clé (38) pour traiter le message à traiter,
- un module de contrôle (40) pour gérer les opérations effectuées par le module de mémoire (30), la batterie de registres d'entrée/sortie (32), le multiplexeur (34) et le module de traitement (42),
- un registre de sortie (44) pour transmettre à la batterie de registres d'entrée/sortie (32) via le multiplexeur (34) le résultat d'une opération de chiffrement ou de déchiffrement,
**caractérisé en ce que** la batterie de registres d'entrée/sortie (32) comprend un registre de brouillage (50) pour recevoir des bits de brouillage étrangers au message à chiffrer ou à déchiffrer et/ou à la clé numérique.

2. Circuit électronique pour la sécurisation d'un coprocesseur dédié à la cryptographie selon la revendication 1, **caractérisé en ce que** le circuit électronique comprend un registre d'entrée annexe (54) connecté au module de traitement (42) et au multiplexeur (34) pour recevoir les bits de brouillage émis directement par le module de traitement (42) ou issus du module de mémoire (30).

3. Circuit électronique pour la sécurisation d'un coprocesseur dédié à la cryptographie selon la revendication 2, **caractérisé en ce que** le registre d'entrée annexe (54) est de la même taille que le registre de brouillage (50).

4. Circuit électronique pour la sécurisation d'un coprocesseur dédié à la cryptographie selon l'une des revendications précédentes, **caractérisé en ce que** les bits de brouillage sont émis de façon aléatoire.

5. Circuit électronique pour la sécurisation d'un coprocesseur dédié à la cryptographie selon l'une des revendications précédentes, **caractérisé en ce que** les bits de brouillage sont émis par groupes de huit bits.

6. Procédé de sécurisation d'un coprocesseur dédié à la cryptographie comprenant les étapes consistant à successivement :
- transmettre depuis un module de mémoire (30) vers une batterie de registres d'entrée/sortie (32) des données au moyen d'une liaison bidirectionnelle (31),
- transmettre, par l'intermédiaire d'un multiplexeur (34), depuis la batterie de registres d'entrée/sortie (32) vers un registre d'entrée (36), respectivement vers un registre de clé (38), des données correspondant à un message à traiter par une opération de chiffrement ou de déchiffrement, respectivement des données correspondant à une clé numérique de chiffrement ou de déchiffrement,
- traiter le message à traiter au moyen d'un module de traitement (42) admettant à une première entrée les données issues du registre d'entrée (36), à une seconde entrée les données issues du registre de clé (38) et fournissant les données correspondant au message traité vers un registre de sortie (44),
**caractérisé en ce que** le procédé selon l'invention comprend l'étape supplémentaire consistant à transmettre à un registre de brouillage (50) de la batterie de registres d'entrée/sortie (32) des bits de brouillage étrangers au nombre à chiffrer et à la clé numérique, les bits de brouillage étant émis directement par le module de mémoire (30) ou étant issus du module de traitement (42).

7. Procédé de sécurisation d'un coprocesseur dédié à la cryptographie selon la revendication 6, **caractérisé en ce que** les bits de brouillage sont transmis dans un registre d'entrée annexe (54) connecté au module de traitement (42) et au multiplexeur (34) pour recevoir les bits de brouillage émis directement par le module de traitement (42) ou issus du module de mémoire (30).

8. Procédé de sécurisation d'un coprocesseur dédié à la cryptographie selon l'une des revendications 6 ou 7, **caractérisé en ce que** les bits de brouillage sont émis de façon aléatoire.

9. Procédé de sécurisation d'un coprocesseur dédié à la cryptographie selon l'une des revendications 6 à 8, **caractérisé en ce que** des bits de brouillage sont transmis au registre de brouillage (50) à chaque chargement dans la batterie de registres d'entrée/sortie (32) d'une clé numérique.

10. Procédé de sécurisation d'un coprocesseur dédié à la cryptographie selon l'une des revendications 6 à 9, **caractérisé en ce que** les bits de brouillage sont émis par groupes de huit bits.

## Patentansprüche

1. Elektronische Schaltung (4) für die auf Kryptographie beruhende Sicherung eines Coprozessors mit:
- einem Speichermodul (30),
- einer Reihe von Eingangs/Ausgangs-Registern (32), die durch eine bidirektionale Verbindung (31) an das Speichermodul (30) angeschlossen ist,
- einem Multiplexer (34), um eine Datenübertragung zwischen der Reihe von Eingangs/Ausgangs-Registern (32) und einem Eingangsregister (36) oder einem Schlüsselregister (38) sicher zu stellen, wobei das Eingangsregister (36) und das Schlüsselregister (38) jeweils die Daten einer durch Verschlüsselung oder Entschlüsselung zu bearbeitenden Mitteilung und die Daten eines digitalen Schlüssels zur Verschlüsselung oder Entschlüsselung erhalten,
- einem Bearbeitungsmodul (42), um einen Verschlüsselungs- oder Entschlüsselungsvorgang durchzuführen, bei dem die zu bearbeitenden Mitteilungen, die in dem Eingangsregister (36) enthalten sind, an einem ersten Eingang und der digitale Schlüssel, der in dem Schlüsselregister (38) zum Bearbeiten der zu bearbeitenden Mitteilung enthalten ist, an einem zweiten Eingang eingelassen wird,
- einem Steuermodul (40), um die Vorgänge zu steuern, die durch das Speichermodul (30), die Reihe von Eingangs/Ausgangs-Registern (32), den Multiplexer (34) und das Bearbeitungsmodul (42) ausgeführt werden,
- einem Ausgangsregister (44), um das Ergebnis eines Verschlüsselungs- oder Entschlüsselungsvorganges über den Multiplexer (34) an die Reihe von Eingangs/Ausgangs-Registern (32) zu übertragen,
**dadurch gekennzeichnet, dass** die Reihe von Eingangs/Ausgangs-Registern (32) ein Störgeräuschregister (50) umfasst, um Bits eines nicht zu der zu verschlüsselnden oder zu entschlüsselnden Mitteilung und/oder zu dem digitalen Schlüssel gehörenden Störgeräusches aufzunehmen.

2. Elektronische Schaltung für die auf Kryptographie beruhende Sicherung eines Coprozessors gemäß Anspruch 1, **dadurch gekennzeichnet, dass** die elektronische Schaltung einen Eingangsregister-Anhang (54) umfasst, der an das Bearbeitungsmodul (42) und an den Multiplexer (34) angeschlossen ist, um die StörgeräuschBits aufzunehmen, die durch das Bearbeitungsmodul (42) direkt übertragen werden oder von dem Speichermodul (30) stammen.

3. Elektronische Schaltung für die auf Kryptographie beruhende Sicherung eines Coprozessors nach Anspruch 2, **dadurch gekennzeichnet, dass** der Eingangsregister-Anhang (54) die gleiche Größe hat wie das Störgeräusch-Register (50).

4. Elektronische Schaltung für die auf Kryptographie beruhende Sicherung eines Coprozessors nach einem der vorhergehenden Ansprüche, **dadurch gekennzeichnet, dass** die Störgeräuschbits in regelloser Weise übertragen werden.

5. Elektronische Schaltung für die auf Kryptographie beruhende Sicherung eines Coprozessor nach einem der vorhergehenden Ansprüche, **dadurch gekennzeichnet, dass** die Störgeräuschbits in Gruppen von acht Bits übertragen werden.

6. Verfahren zur auf Kryptographie beruhenden Sicherung eines Coprozessors mit aufeinander folgenden Schritten:
- Übertragen von Daten von einem Speichermodul (30) an eine Reihe von Eingangs/Ausgangs-Registern (32) mit Hilfe einer bidirektionalen Verbindung (31),
- Übertragen von Daten, die einer durch einen Verschlüsselungs- oder Entschlüsselungsvorgang zu bearbeitenden Mitteilung entsprechen bzw. von Daten, die einem digitalen Schlüssel zur Verschlüsselung oder Entschlüsselung entsprechen, mit Hilfe eines Multiplexers (34) von der Reihe von Eingangs/Ausgangs-Registern (32) an ein Eingangsregister (36) bzw. an ein Schlüsselregister (38),
- Bearbeiten der zu bearbeitenden Mitteilung mit Hilfe eines Bearbeitungsmoduls (42), so dass an einem ersten Eingang die vom Eingangsregister (36) stammenden Daten, an einem zweiten Eingang die vom Schlüsselregister (38) stammenden Daten eingelassen werden und die Daten, die der bearbeiteten Mitteilung entsprechen, an ein Ausgangsregister (44) geliefert werden,
**dadurch gekennzeichnet, dass** das Verfahren gemäß der Erfindung einen zusätzlichen Schritt umfasst, der darin besteht, an ein Störgeräuschregister (50) der Reihe von Eingangs/Ausgangs-Registern (32) nicht zu der zu verschlüsselnden Anzahl und zu dem digitalen Schlüssel gehörende Störgeräuschbits zu übertragen, wobei die Störgeräuschbits durch das Speichermodul (30) direkt übertragen werden oder aus dem Bearbeitungsmodul (42) stammen.

7. Verfahren zur auf Kryptographie beruhenden Sicherung eines Coprozessors nach Anspruch 6, **dadurch gekennzeichnet, dass** die Störgeräuschbits in einen Eingangsregister-Anhang (54) übertragen werden, der an das Bearbeitungsmodul (42) und an den Multiplexer (34) angeschlossen ist, um die direkt vom Bearbeitungsmodul (42) übertragenen oder vom Speichermodul (30) stammenden Störgeräuschbits aufzunehmen.

8. Verfahren zur auf Kryptographie beruhenden Sicherung eines Coprozessors nach einem der Ansprüche 6 oder 7, **dadurch gekennzeichnet, dass** die Störgeräuschbits in regelloser Weise übertragen werden.

9. Verfahren zur auf Kryptographie beruhenden Sicherung eines Coprozessors nach einem der Ansprüche 6 bis 8, **dadurch gekennzeichnet, dass** die Störgeräuschbits bei jeder Ladung eines digitalen Schlüssels in die Reihe von Eingangs/Ausgangs-Registern (32) an das Störgeräuschregister (50) übertragen werden.

10. Verfahren zur auf Kryptographie beruhenden Sicherung eines Coprozessors nach einem der Ansprüche 6 bis 9, **dadurch gekennzeichnet, dass** die Störgeräuschbits in Gruppen von acht Bits übertragen werden.

## Claims

1. Electronic circuit (4) for protecting a coprocessor dedicated to cryptography, comprising:
- a memory module (30),
- an array of input/output registers (32) connected to the memory module (30) by a bidirectional link (31),
- a multiplexer (34) for providing data transfer between the array of input/output registers (32), and an input register (36) or a key register (38), the input register (36) and the key register (38) receiving respectively the data of a message to be processed by enciphering or deciphering and the data of a digital enciphering or deciphering key,
- a processing module (42) for performing an enciphering or deciphering operation admitting at a first input the messages to be processed in the input register (36), and at a second input the digital key contained in the key register (38) for processing the message to be processed,
- a control module (40) for managing the operations performed by the memory module (30), the array of input/output registers (32), the multiplexer (34) and the processing module (42),
- an output register (44) for transmitting, to the array of input/output registers (32) via the multiplexer (34), the result of an enciphering or deciphering operation,
**characterised in that** the array of input/output registers (32) comprises a scrambling register (50) for receiving scrambling bits extraneously to the message to be enciphered or deciphered and/or to the digital key.

2. Electronic circuit for protecting a coprocessor dedicated to cryptography according to claim 1, **characterised in that** the electronic circuit comprises a related input register (34) connected to the processing module (42) and to the multiplexer (34) in order to receive the scrambling bits transmitted directly by the processing module (42) or issuing from the memory module (30).

3. Electronic circuit for protecting a coprocessor dedicated to cryptography according to claim 2, **characterised in that** the related input register (34) is of the same size as the scrambling register (50).

4. Electronic circuit for protecting a coprocessor dedicated to cryptography according to one of the preceding claims, **characterised in that** the scrambling bits are transmitted in a random fashion.

5. Electronic circuit for protecting a coprocessor dedicated to cryptography according to one of the preceding claims, **characterised in that** the scrambling bits are transmitted in groups of eight bits.

6. Method of protecting a coprocessor dedicated to cryptography comprising the steps consisting of successively:
- transmitting data from a memory module (30) to an array of input/output registers (32) by means of a bidirectional link (31),
- transmitting, by means of a multiplexer (34), from an array of input/output registers (32) to an input register (36), or respectively to a key register (38), data corresponding to a message to be processed by an enciphering or deciphering operation, or respectively data corresponding to a digital enciphering or deciphering key,
- processing the message to be processed by means of a processing module (42) admitting at a first input the data issuing from the input register (36) and at a second input the data issuing from the key register (38) and supplying the data corresponding to the processed message to an output register (34),
**characterised in that** the method according to the invention comprises the additional step consisting of transmitting, to a scrambling register (50) of the array of input/output registers (32), scrambling bits extraneous to the number to be enciphered and to the digital key, and the scrambling bits being sent directly by the memory module (30) or issuing from the processing module (42).

7. Method of protecting a coprocessor dedicated to cryptography according to claim 6, **characterised in that** the scrambling bits are transmitted in a related input register (54) connected to the processing module (42) and to the multiplexer (34) in order to receive the scrambling bits sent directly by the processing module (42) or issuing from the memory module (30).

8. Method of protecting a coprocessor dedicated to cryptography according to one of claims 6 or 7, **characterised in that** the scrambling bits are sent in a random fashion.

9. Method of protecting a coprocessor dedicated to cryptography according to one of claims 6 to 8, **characterised in that** the scrambling bits are transmitted to the scrambling register (50) at each loading of a digital key into the array of input/output registers (32).

10. Method of protecting a coprocessor dedicated to cryptography according to one of claims 6 to 9, **characterised in that** the scrambling bits are sent by groups of eight bits.
